# EUROPÄISCHE PATENTSCHRIFT

(11) **EP 3 341 270 B1**
(45) Veröffentlichungstag und Bekanntmachung des Hinweises auf die Patenterteilung: **26.06.2019**
(21) Anmeldenummer: 16751234.2
(22) Anmeldetag: 29.07.2016
(51) Int. Cl.: B62B 5/00, B62D 63/06, B62D 53/00

(54) **TRAILERZUG MIT HUBEINRICHTUNG**
TRAILER TRAIN HAVING A LIFTING DEVICE
TRAIN D'ACHEMINEMENT POURVU D'UN DISPOSITIF DE LEVAGE

(30) Priorität: 24.08.2015 DE 202015104465 U
(43) Veröffentlichungstag der Anmeldung: 04.07.2018
(73) Patentinhaber: LR Intralogistik GmbH, 84109 Wörth a. d. Isar (DE)
(72) Erfinder: BERGHAMMER, Fritz, 84028 Landshut (DE)
(74) Vertreter: Patentship Patentanwaltsgesellschaft mbH
(86) Internationale Anmeldenummer: PCT/EP2016/068213
(87) Internationale Veröffentlichungsnummer: WO 2017/032551

(56) Entgegenhaltungen:
- EP-A1- 2 808 234
- EP-A2- 2 161 182
- DE-U1-202009 001 933
- DE-U1-202013 001 255

## Beschreibung

Die Erfindung betrifft einen Trailerzuganhänger mit einem höhenverstellbaren Tragrahmen oder Tragrahmenteil nach dem Oberbegriff des Anspruchs 1.

Derartige Routenzuganhänger werden zunehmend in der maschinellen Serienfertigung von Produkten eingesetzt, beispielsweise für den Kraftfahrzeugbau, wo die einzelnen Arbeitsstationen über Routen- oder Trailerzüge mit den erforderlichen Bauteilen versorgt werden. In einem Trailerzug verfährt ein Zugfahrzeug eine Mehrzahl von Trailerzuganhängern, auf denen die erforderlichen Einzelteile transportiert werden. Diese sind in der Regel auf Paletten oder in Gitterboxen untergebracht, die ihrerseits auf Transportgutwagen (Trolleys) über kurze Strecken bewegt werden.

Die Erfindung geht aus von Trailerzuganhängern mit Tragrahmen, die ganz oder teilweise über eingebaute Hubeinrichtungen relativ zu den Rädern des Fahrwerks angehoben werden können, um zu vermeiden, dass während des werksinternen Transports die Lenkrollen der Trolleys auf dem Boden abrollen und das Fahrverhalten negativ beeinträchtigen. Beispiele für diesen Stand der Technik sind das europäische Patent EP 2 161 182 B1 mit einem in Draufsicht E-förmigen Tragrahmen sowie das Gebrauchsmuster DE 20 2009 001 933 U1 mit einem C-förmigen Tragrahmen und das deutsche Gebrauchsmuster DE 20 2013 001 255 U1, das einen Trailerzuganhänger mit einer Hubeinrichtung offenbart.

Aus EP 2 808 234 A1 ist eine Variante bekannt, bei der zum Anheben des Trolleys nicht der ganze Tragrahmen vertikal verstellt wird, sondern nur ein Teil von diesem, hier eine Mittelkonsole, auf der sich der Trolley abstützt.

Für die Hubeinrichtung ist es bekannt, pneumatische oder hydraulische Arbeitszylinder einzusetzen. Pneumatische Huborgane benötigen jedoch einen Kompressor mit hohem Energiebedarf, der überdies den Nachteil hat, dass er verhältnismäßig laut ist. Hydraulische Huborgane haben dem gegenüber einen deutlich besseren Wirkungsgrad, allerdings den Nachteil, dass das Arbeitsmedium Öl ist, so dass bei Leckverlusten starke Verschmutzungen zu verzeichnen sind.

Aus diesem Grund wird vielfach auf Hubeinrichtungen übergegangen, die elektrisch angetriebene Spindeln haben, bei denen jedoch wegen der Reibungsverluste im Gewinde keine zufriedenstellenden Wirkungsgrade realisiert werden können.

Der Erfindung liegt die Aufgabe zugrunde, einen Trailerzuganhänger zur Verfügung zu stellen, dessen Hubeinrichtung im Vergleich zu bekannten Systemen wesentlich bessere Wirkungsgrade hat, um den Tragrahmen oder einen Teil davon zusammen mit dem darauf stehenden Trolley über die Räder des Fahrwerks anzuheben.

Zur Lösung dieser Aufgabe ist gemäß der Erfindung vorgesehen, dass die Hubeinrichtung aus wenigstens einer verdrehbaren Exzenterscheibe besteht, die sich an einer Nockenrolle abstützt.

Die Exzenterscheibe kann dabei auf einer drehbar angetriebenen Welle angebracht sein. Vorzugsweise ist die Nockenrolle am Tragrahmen oder einem Teil davon gelagert. In kinematischer Umkehrung ist es auch möglich, die Exzenterscheibe auf einem feststehenden Zapfen drehbar zu lagern und am Tragrahmen oder einem Teil davon die Nockenrolle anzubringen. In diesem Fall entfällt die drehbar angetriebene Welle.

Eine gemäß der Erfindung ausgebildete Hubeinrichtung ist im Vergleich zum Stand der Technik wesentlich vorteilhafter, da sie kein unter Druck stehendes Arbeitsmedium benötigt und im Vergleich mit Spindelantrieben vernachlässigbare Reibungsverluste hat, so dass auch hier erheblich bessere Wirkungsgrade erzielt werden können.

In Weiterbildung der Erfindung ist die Radachse, die im Allgemeinen als Starrachse ausgebildet ist, in der drehbar angetriebenen Welle gelagert. Im Falle eines E-Rahmens hat das mittig angeordnete Fahrwerk ein die Welle bildendes Rohr, an dem vorzugsweise an beiden Enden eine Exzenterscheibe befestigt ist, die sich bei der Drehung des Rohres relativ zu der Nockenrolle vertikal bewegt und dabei den Tragrahmen oder einem Teil von diesem über die Radachse anhebt.

Die Erfindung ist auch anwendbar bei C-förmigen Tragrahmen, das an allen vier Ecken jeweils ein Gelenk des Fahrwerks mit einer Radachse hat, die in einem eigenen Rohr gelagert ist, auf dem die Exzenterscheibe befestigt ist.

Im einfachsten Fall eines E-förmigen Tragrahmens trägt die Welle an ihren beiden Enden jeweils eine Exzenterscheibe, während in ihrem mittleren Bereich ein Zahnrad befestigt ist, das mit einem von einem Motor angetriebenen Ritzel kämmt. Der Motor ist im Allgemeinen als Elektromotor ausgebildet und unterhalb eines das Fahrwerk aufnehmenden Querträgers des Tragrahmens vertikal beweglich angebracht.

Bei dieser Ausführungsform sind vorzugsweise die beiden Enden der Welle drehbar und höhenverschiebbar in einer vertikalen Wange des Querträgers gelagert, an der auch die Nockenrolle gelagert ist, auf der sich die Exzenterscheibe abstützt.

Gemäß einer Alternative sind die Nockenrollen an zwei seitlichen Schenkeln eines waagrechten, den Transportgutwagen aufnehmenden Abstütztisches gelagert, der den höhenverstellbaren Teil des Tragrahmens bildet.

Es ist von besonderem Vorteil, wenn die Exzenterscheibe so ausgebildet ist, dass ihr Außenumfang, ausgehend von einer teilkreisförmigen Aussparung mit dem Radius der Nockenrolle, einen stetig wachsenden Radius hat. Auf diese Weise hat die drehbare Exzenterscheibe zwei Endstellungen: eine abgesenkte Endstellung, bei der die Nockenrolle in die teilkreisförmige Aussparung eingreift, und eine angehobene Stellung, bei der die Spitze des Außenumfangs auf der Nockenrolle zum Stehen kommt.

Die Erfindung ist nachstehend an zwei Ausführungsbeispielen erläutert, die in der Zeichnung dargestellt sind. Es zeigen:
- Fig. 1: die Ansicht von schräg unten eines Trailerzuganhängers gemäß der Erfindung,
- Fig. 2: in vergrößerter Darstellung eine Unteransicht eines Teil des Einachsfahrwerks der Fig. 1 mit dem Antriebsmotor und dem Getriebe für die rohrförmige Welle,
- Fig. 3: die Unteransicht des Fahrwerks der Fig. 1 und Fig. 2 in der abgesenkten Stellung des Tragrahmens,
- Fig. 4: eine der Fig. 3 entsprechende Darstellung beim Anheben des Tragrahmens,
- Fig. 5: einen Vertikalschnitt durch das Fahrwerk in der vollständig abgesenkten Stellung des Tragrahmens,
- Fig. 6: die vollständig angehobene Stellung des Tragrahmens,
- Fig. 7: die perspektivische Ansicht eines abgeänderten Trailerzuganhängers, bei dem nur ein Teil des Tragrahmens vertikal verstellbar ist,
- Fig. 8: den Tragrahmen der Fig. 7 in der angehobenen Stellung des Abstütztisches,
- Fig. 9: eine vergrößerte Schnittdarstellung des Abstütztisches der Fig. 7 und Fig. 8 in abgesenkter Stellung und
- Fig. 10: den Abstütztisch in angehobener Transportstellung.

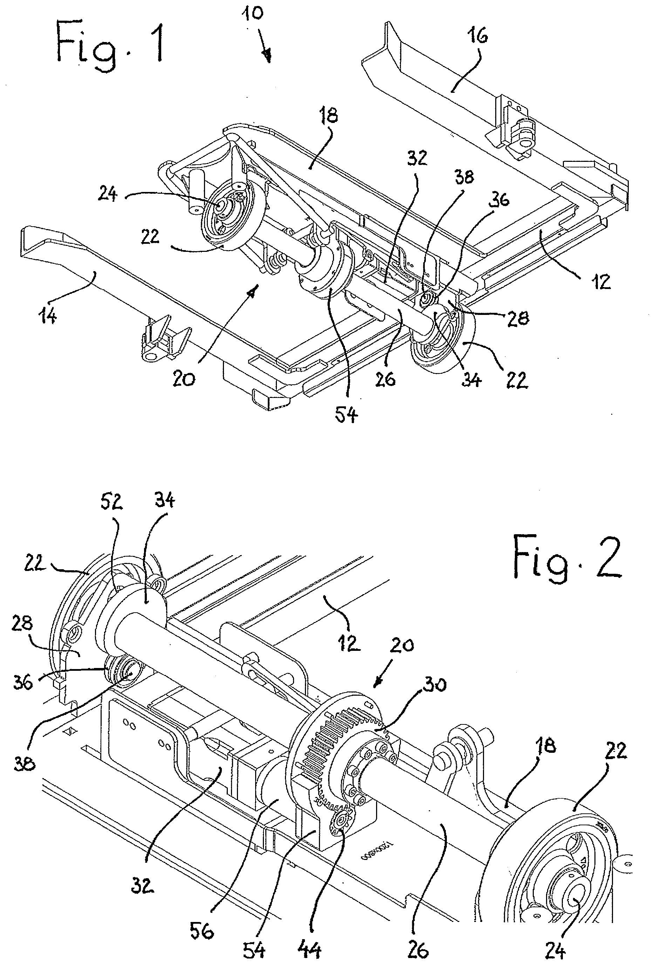

In den Fig. 1 bis Fig. 6 ist die Erfindung am Beispiel eines in Draufsicht E-förmigen Tragrahmens 10 erläutert, bei dem von einem seitlichen Längsholm 12 zwei Querholme 14 und 16 und ein mittig angeordneter Querträger 18 abstehen. An der Unterseite des Querträgers 18 ist in bekannter Weise ein Fahrwerk 20 mit zwei seitlichen Rädern 22 angebracht, die drehbar auf einer Achse 24 gelagert sind.

Die Achse 24 ist als Starrachse ausgebildet und befindet sich in einer als Rohr ausgebildeten Welle 26, deren beide Enden in einem Langloch 52 einer vertikalen Wange 28 drehbar und höhenverschiebbar gelagert sind, die von dem Querträger 18 nach unten absteht.

Wie Fig. 2 zeigt, ist auf die Mitte der Welle 26 ein Stirnzahnrad 30 aufgezogen, das mit einem Ritzel 44 kämmt, das über ein Planetengetriebe 56 von einem Elektromotor 32 angetrieben wird. Der Motor 32 ist über das Gehäuse des Planetengetriebes 56 fest mit dem Getriebegehäuse 54 von Zahnrad 30 und Ritzel 44 verbunden und an der Unterseite des Querträgers 18 vertikal beweglich abgestützt.

Auf die beiden Enden der rohrförmigen Welle 26 ist jeweils eine Exzenterscheibe 34 aufgezogen, die sich auf einer Nockenrolle 36 abstützt. Die Nockenrolle 36 ist ihrerseits auf einem horizontalen Achsstummel 38 drehbar gelagert, der von der Wange 28 absteht.

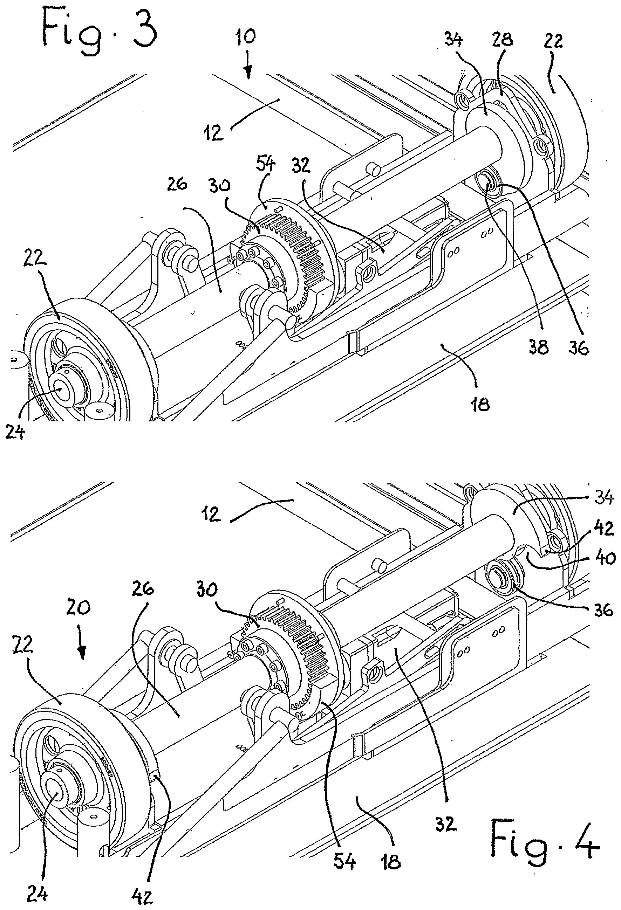

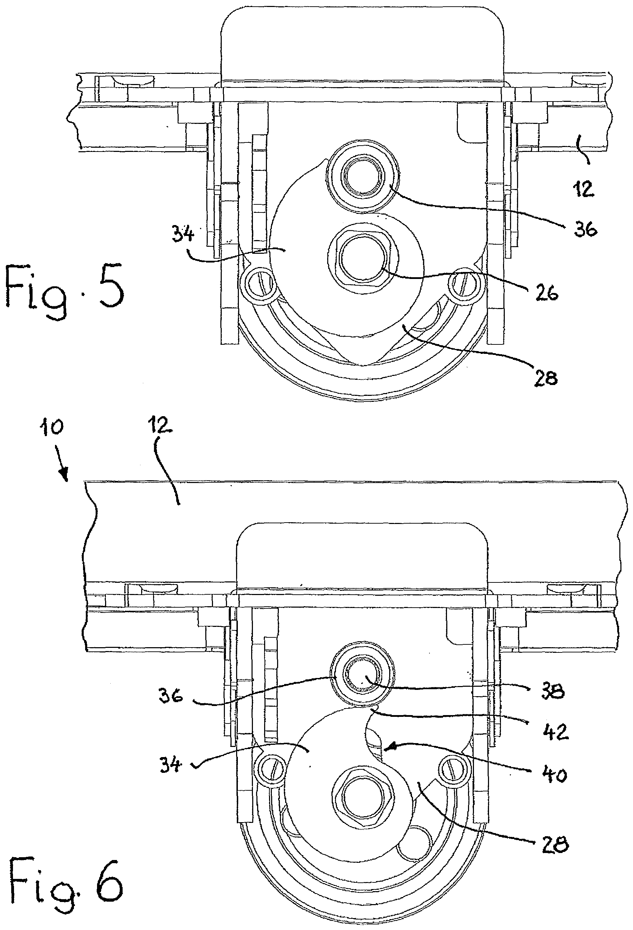

Die Fig. 3 bis Fig. 6 zeigen deutlich, dass die Exzenterscheibe 34, die an dem jeweiligen Ende der Welle 26 befestigt ist, eine teilkreisförmige Aussparung 40 mit dem Radius der Nockenrolle 36 hat. Ausgehend von dieser Aussparung 40 hat der Außenumfang der Exzenterscheibe 34 einen wachsenden Radius und endet in einer Spitze 42, die nach einer Umdrehung der Exzenterscheibe 34 ihre Endstellung an der Nockenrolle 36 hat, wodurch der Tragrahmen 10 zusammen mit dem darauf ruhendem Gut seine Höchststellung über der Achse 24 des Fahrwerks 20 erreicht hat. Wenn anschließend durch den Motor 32 das Zahnrad 30 - in Fig. 6 im Uhrzeigersinn - zurückgedreht wird, kommt am Ende dieser Drehbewegung die Aussparung 40 zum Anschlag an der Nockenrolle 36, was in Fig. 5 zu erkennen ist, die den abgesenkten Zustand des Tragrahmens 10 zeigt.

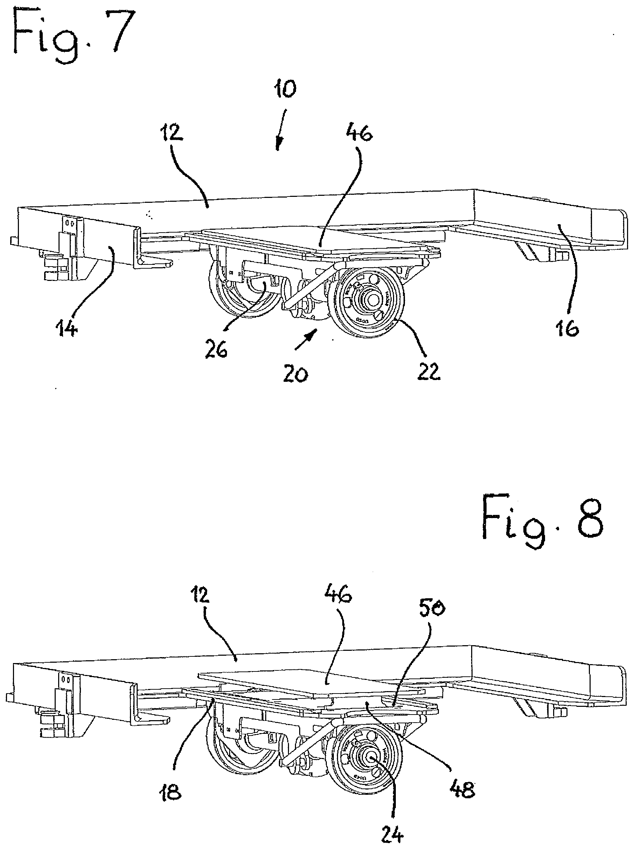

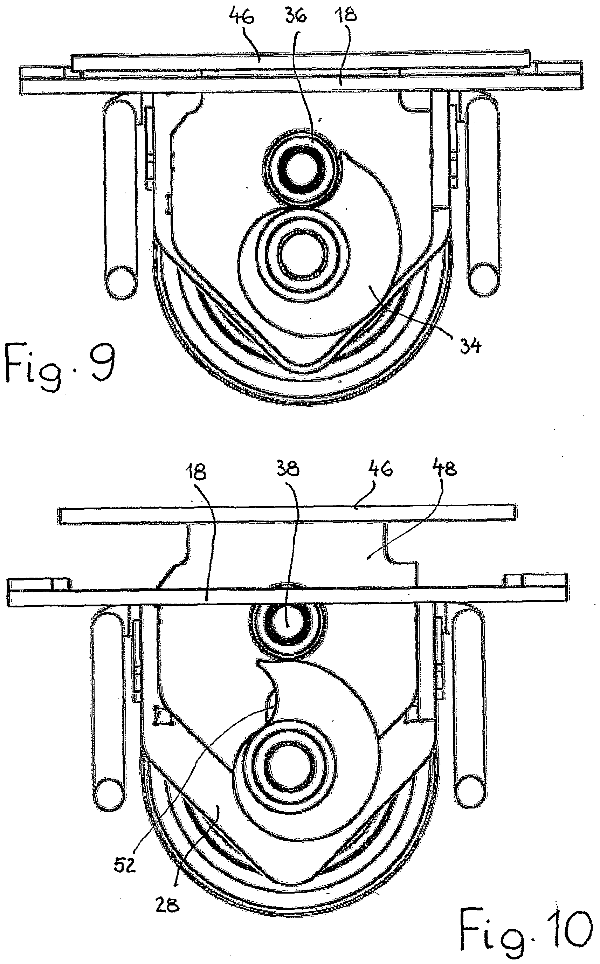

Die Variante der Fig. 7 bis Fig. 10 zeigen ebenfalls einen E-förmigen Tragrahmen 10, von dessen Längsholm 12 ein mittiger Querträger 18 mit einem Fahrwerk 20 absteht. Bei dieser Ausführungsform dient jedoch die Hubeinrichtung mit ihren beiden Exzenterscheiben 34 nicht zum Anheben des ganzen Tragrahmens 10, sondern nur eines Teils davon, der hier ein waagrechter Abstütztisch 46 ist, der sich über dem Querträger 18 befindet. Von dem Abstütztisch 46 stehen zwei seitliche Schenkel 48 nach unten ab, die durch entsprechende Öffnungen 50 des Querträgers 18 hindurchgreifen. An jedem Schenkel 48 ist eine Nockenrolle 36 gelagert, an der die Ex zenterscheibe 34 anliegt. Wenn diese über die Welle 26 durch den hier nicht gezeigten Motor aus der Stellung der Fig. 7 und Fig. 9 in die Stellung der Fig. 8 und Fig. 10 gedreht wird, hebt die Exzenterscheibe 34 den Abstütztisch 46 und die darauf ruhende Last in die Transportstellung des Tragrahmens 10.

In Fig. 10 ist zu erkennen, dass in den jeweiligen Schenkel 48 ein vertikales Langloch 52 eingearbeitet ist, durch das sich die Starrachse 24 des Fahrwerks 20 erstreckt und in dem das Ende der Welle 26 drehbar und vertikal beweglich gelagert ist.

Bei einer nicht dargestellten Alternative der Hubeinrichtung kann die Exzenterscheibe 34 auf einem feststehenden Zapfen drehbar gelagert sein und sich an einer Nockenrolle 36 abstützen, über die der Tragrahmen 10 oder ein Teil von diesem vertikal bewegt wird.

Wie bereits erwähnt, kann die Erfindung auch an anderen Tragrahmen 10 eingesetzt werden, beispielsweise einem C-Rahmen mit insgesamt vier Fahrwerken 20.

## Patentansprüche

1. Trailerzuganhänger mit einem für die Aufnahme mindestens eines in einem Trailerzug mitgeführten Transportgutwagens dienenden Tragrahmen (10), der ein Fahrwerk (20) mit wenigstens zwei Rädern (22) hat, wobei zur Höhenverstellung von wenigstens einem zur Abstützung des Transportgutwagens dienenden Teil des Tragrahmens (10) relativ zu den Rädern (22) eine Hubeinrichtung vorgesehen ist,
**dadurch gekennzeichnet,**
**dass** die Hubeinrichtung aus wenigstens einer verdrehbaren Exzenterscheibe (34) besteht, die sich an einer Nockenrolle (36) abstützt.

2. Trailerzuganhänger nach Anspruch 1,
**dadurch gekennzeichnet,**
**dass** die Exzenterscheibe (34) auf einer drehbar angetriebenen Welle (26) angebracht ist.

3. Trailerzuganhänger nach Anspruch 1 oder 2,
**dadurch gekennzeichnet,**
das die Nockenrolle (36) am Tragrahmen (10) oder einem Teil des Tragrahmens (10) gelagert ist.

4. Trailerzuganhänger nach Anspruch 2 oder 3,
**dadurch gekennzeichnet,**
**dass** die Welle (26) als Rohr ausgebildet ist, in dem eine Achse (24) der wenigstens zwei Räder (22) gelagert ist.

5. Trailerzuganhänger nach einem der Ansprüche 2 bis 4,
**dadurch gekennzeichnet,**
**dass** an jedem der beiden Enden der Welle (26) eine Exzenterscheibe (34) und in ihrem mittleren Bereich ein Zahnrad (30) befestigt sind, das mit einem von einem Motor (32) angetriebenen Ritzel (44) kämmt.

6. Trailerzuganhänger nach Anspruch 5,
**dadurch gekennzeichnet,**
**dass** der Motor (32) über ein Getriebegehäuse (54) mit Zahnrad (30) und Ritzel (44) mit der Welle (26) verbunden ist.

7. Trailerzuganhänger nach Anspruch 6,
**dadurch gekennzeichnet,**
**dass** der Motor (32) zwischen der Welle (26) und einem das Fahrwerk (20) aufnehmenden Querträger (18) des Tragrahmens (10) angebracht ist.

8. Trailerzuganhänger nach Anspruch 7,
**dadurch gekennzeichnet,**
**dass** die beiden Enden der Welle (26) drehbar und höhenverschiebbar in einer vertikalen Wange (28) des Querträgers (18) gelagert sind.

9. Trailerzuganhänger nach Anspruch 8,
**dadurch gekennzeichnet,**
**dass** die Nockenrollen (36) an den mit dem Querträger (18) fest verbundenen Wangen (28) gelagert sind.

10. Trailerzuganhänger nach Anspruch 8,
**dadurch gekennzeichnet,**
**dass** die Nockenrollen (36) an zwei seitlichen Schenkeln (48) eines waagrechten, den Transportgutwagen aufnehmenden Abstütztisches (46) gelagert sind, der den höhenverstellbaren Teil des Tragrahmens (10) bildet.

11. Trailerzuganhänger nach einem der vorhergehenden Ansprüche,
**dadurch gekennzeichnet,**
**dass** der Außenumfang der Exzenterscheibe (34), ausgehend von einer teilkreisförmigen Aussparung (40) mit dem Radius der Nockenrolle (36), zumindest über einen Teil des Außenumfangs einen wachsenden Radius hat.

## Claims

1. Trailer-train trailer having a carrying frame (10) which serves for receiving at least one trolley carried along in a trailer train, the carrying frame having a chassis (20) with at least two wheels (22), wherein a lifting device is provided for the adjustment of the height of at least one part of the carrying frame (10), said part serving to support the trolley, relative to the wheels (22),
**characterized in that**
the lifting device consists of at least one rotatable eccentric disc (34) which is supported on a cam roller (36).

2. Trailer-train trailer according to Claim 1,
**characterized in that**
the eccentric disc (34) is mounted on a rotatably driven shaft (26).

3. Trailer-train trailer according to Claim 1 or 2,
**characterized in that**
the cam roller (36) is mounted on the carrying frame (10) or on a part of the carrying frame (10).

4. Trailer-train trailer according to Claim 2 or 3,
**characterized in that**
the shaft (26) is configured as a tube in which an axle (24) of the at least two wheels (22) is mounted.

5. Trailer-train trailer according to one of Claims 2 to 4,
**characterized in that**
an eccentric disc (34) is fastened to each of the two ends of the shaft (26), and a gearwheel (30) which meshes with a pinion (44) driven by a motor (32) is fastened in the central region of said eccentric disc.

6. Trailer-train trailer according to Claim 5,
**characterized in that**
the motor (32) is connected to the shaft (26) by the gearwheel (30) and pinion (44) via a gearbox (54).

7. Trailer-train trailer according to Claim 6,
**characterized in that**
the motor (32) is fitted between the shaft (26) and a crossmember (18) of the carrying frame (10), the crossmember receiving the chassis (20).

8. Trailer-train trailer according to Claim 7,
**characterized in that**
the two ends of the shaft (26) are mounted in a rotatable and height-displaceable manner in a vertical side member (28) of the crossmember (18).

9. Trailer-train trailer according to Claim 8,
**characterized in that**
the cam rollers (36) are mounted on the side members (28) which are fixedly connected to the crossmember (18).

10. Trailer-train trailer according to Claim 8,
**characterized in that**
the cam rollers (36) are mounted on two lateral limbs (48) of a horizontal supporting table (46) which receives the trolley and forms the height-adjustable part of the carrying frame (10).

11. Trailer-train trailer according to one of the preceding claims,
**characterized in that,**
starting from a partially circular recess (40) having the radius of the cam roller (36), the outer circumference of the eccentric disc (34) has an increasing radius at least over part of the outer circumference.

## Revendications

1. Remorque de train de convoyage avec un cadre porteur (10) destiné à recevoir au moins un véhicule de transport entraîné dans un train de convoyage, qui comporte un bogie (20) avec au moins deux roues (22), dans laquelle il est prévu un dispositif de levage pour le réglage en hauteur par rapport aux roues (22) d'au moins une partie du cadre porteur (10) destiné à supporter le véhicule de transport,
**caractérisée en ce que** le dispositif de levage se compose d'au moins un disque d'excentrique rotatif (34), qui s'appuie sur un galet de came (36).

2. Remorque de train de convoyage selon la revendication 1, **caractérisée en ce que** le disque d'excentrique (34) est monté sur un arbre (26) entraîné en rotation.

3. Remorque de train de convoyage selon une revendication 1 ou 2, **caractérisée en ce que** le galet de came (36) est monté sur le cadre porteur (10) ou sur une partie du cadre porteur (10).

4. Remorque de train de convoyage selon une revendication 2 ou 3, **caractérisée en ce que** l'arbre (26) est formé par un tube, dans lequel un essieu (24) desdites au moins deux roues (22) est supporté.

5. Remorque de train de convoyage selon l'une quelconque des revendications 2 à 4, **caractérisée en ce qu'**un disque d'excentrique (34) est fixé à chacune des deux extrémités de l'arbre (26) et une roue dentée (30) est fixée dans sa région centrale, et engrène avec un pignon (44) entraîné par un moteur (32).

6. Remorque de train de convoyage selon la revendication 5, **caractérisée en ce que** le moteur (32) est relié à l'arbre (26) par un carter de transmission (54) avec la roue dentée (30) et le pignon (44).

7. Remorque de train de convoyage selon la revendication 6, **caractérisée en ce que** le moteur (32) est installé entre l'arbre (26) et une traverse (18) du cadre porteur (10) comportant le bogie (20).

8. Remorque de train de convoyage selon la revendication 7, **caractérisée en ce que** les deux extrémités de l'arbre (26) sont montées de façon rotative et réglable en hauteur dans une joue verticale (28) de la traverse (18).

9. Remorque de train de convoyage selon la revendication 8, **caractérisée en ce que** les galets de came (36) sont montés sur les joues (28) solidement reliées à la traverse (18).

10. Remorque de train de convoyage selon la revendication 8, **caractérisée en ce que** les galets de came (36) sont montés sur deux branches latérales (48) d'une table de support horizontale (46) recevant le véhicule de transport, et qui forme la partie réglable en hauteur du cadre porteur (10).

11. Remorque de train de convoyage selon l'une quelconque des revendications précédentes, **caractérisée en ce que** le pourtour extérieur du disque d'excentrique (34) présente un rayon croissant au moins sur une partie du pourtour extérieur à partir d'une découpe partiellement circulaire (40) avec le rayon du galet de came (36).
